# EUROPEAN PATENT APPLICATION

(11) **EP 1 130 870 A2**
(43) Date of publication of application: **05.09.2001**
(21) Application number: 00119942.1
(22) Date of filing: 13.09.2000
(51) Int. Cl.: H04L 29/06, G06F 1/00

(54) **Improper-access prevention system**

(30) Priority: 28.02.2000 JP 2000051462
(71) Applicant: Attention System Co., Ltd., Izumi-shi, Osaka-fu (JP)
(72) Inventor: Isaka, Isao, c/o Attention System Co., Ltd., Izumi-shi, Osaka-fu (JP); Tanaka, Takao, c/o Attention System Co., Ltd., Izumi-shi, Osaka-fu (JP); Isaka, Satoru, c/o Attention System Co., Ltd., Izumi-shi, Osaka-fu (JP)
(74) Representative: Schoppe, Fritz, Dipl.-Ing.

(57) **Abstract**

An improper-access prevention system includes a general control unit including a telephone line control company and a provider. When a hacker who is one of the users of the Internet improperly access or invades into a home page, a date and time of the invasion is recorded in a system of a home page controller. A general control unit records information of including the hacker's telephone number, ID code, password, access code, a connected time, and information of a third party connected with the hacker. The whereabouts of the hacker is specified based on the date and time of the invasion and the recorded information.

## Description

### BACKGROUND OF THE INVENTION

### 1. Field of the Invention

The present invention relates to an improper-access prevention system. More particularly, the present invention relates to an improper-access prevention system for checking for improper access to a third person's home page through the Internet.

### 2. Description of the Prior Art

To connect a personal computer or other suitable communication device to the Internet, the person makes a contract with a communication line controller such as a telephone line control company and an Internet connecting company, such as a provider and registers a personal ID code and password. In this case, the user's computer or other suitable communication device is connected to a provider's computer or other suitable communication device through a telephone line; the user's identity is confirmed by inputting the user's ID code and password; and the provider connects the user's computer or other suitable communication device to the Internet. The user can see the content of a desired home page by inputting the access code thereof.

A person who has a home page installed makes a contract with a controller of a server of the home page and selects a password. The person can enter the home page by inputting the password. The controller of the server can also enter the home page. Thus, a person who accesses the homepage to see the content of the home page cannot enter the home page without entering the password.

Recently, persons called hackers or crackers invade the home page improperly to rewrite or destroy the content of the home page. To invade the home page, the hacker must obtain the password of a person who has installed the home page. The hacker obtains the password by utilizing a password analysis tool that allows passage through the inquiry routine of the password. Not only the personal password, but also the password of the controller of the server can be used to invade into the home page. In electronic transactions that are made by utilizing the Internet, there are many criminals who obtain the password of a person's credit card and successfully impersonate the person to make improper transactions. This type of crime is increasing.

Various coding techniques have been developed to prevent passwords from being decoded to thereby prevent such an improper access from being made. However, hackers have developed decoding techniques and continue to gain improper access. The coding and decoding techniques are competing with each other. Also, it is difficult to determine the hacker's or invader's whereabouts.

### SUMMARY OF THE INVENTION

To overcome the above-described problems, preferred embodiments of the present invention provide an improper-access prevention system for preventing improper access to a home page by identifying an invader when an improper invasion into the home page is made through the Internet.

Preferred embodiments of the present invention provide an improper-access prevention system in which a general controller collectively controlling a communication line controller and an internet connecting company controls all information of a user of the Internet when a user's computer or other communication device is connected to the Internet and of a third person whose computer or other communication device is connected with the user's computer or other communication device.

In the improper-access prevention system, the information includes the user's telephone number, ID code or password.

In the improper-access prevention system, the information includes the third party's telephone number, access code, ID code, password, a connected date or a connected time.

According to the improper-access prevention system of preferred embodiments of the present invention, the general controller can obtain the information of the user on the Internet when a user's computer or other communication device is connected to the Internet and a telephone number and other information accessed by the user. Thus , when the hacker invades a home page improperly, the whereabouts of the hacker can be determined based on the date and time of the invasion and controlled information. The improper-access prevention system is expected to have the effect of preventing the hacker from making an improper invasion due to the ability to determine the whereabouts of the hacker.

Other features, characteristics, elements and advantages of the present invention will become apparent from the following description of preferred embodiments thereof with reference to the attached drawings.

### BRIEF DESCRIPTION OF THE DRAWINGS

Fig. 1 shows an improper-access prevention system according to preferred embodiments of the present invention.

Fig. 2 shows the case in which a hacker makes an improper access by using a plurality of proxy servers.

### DETAILED DESCRIPTION OF PREFERRED EMBODIMENTS

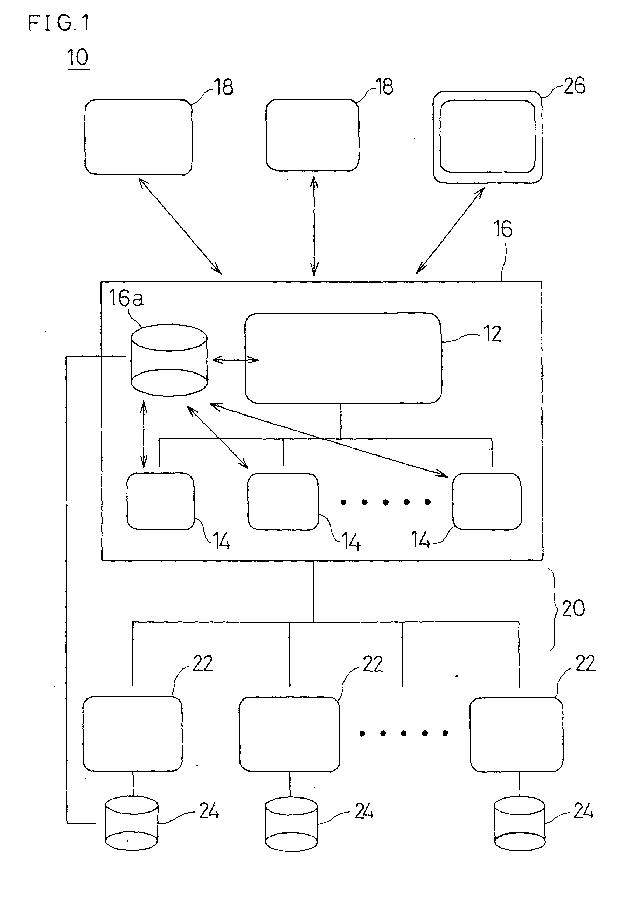

Fig. 1 shows an improper-access prevention system according to preferred embodiments of the present invention. An improper-access prevention system 10 includes a general controller constructed of a communication line controller and an Internet connecting company. A telephone line control company 12 serves as the communication line controller. A provider 14 functions as the Internet connecting company. A general control company 16 including the telephone line control company 12 and the provider 14 functions as the general controller.

A user 18 makes a contract with a general control company 16. As a result, a user's computer is connected to a provider's computer through a telephone line. A user's ID code and password prove that the user 18 has the right to connect the user' s computer to the Internet. When the user 18 has been confirmed as an authorised user of the Internet, the provider 14 connects the user's computer to the Internet 20. Accordingly, the user 18 can access a desired home page 22 controlled by a home page controller 24 by inputting the access code of the home page 22.

When the user 18 connects the user's computer to the provider's computer, the telephone line control company 12 informs the general control company 16 of a user's telephone number. The user's telephone number is recorded in a recording device 16a of the general control company 16. The provider 14 informs the general control company 16 of the user's ID code and password. The user's ID code and password are recorded in the recording device 16a of the general control company 16.

When the user 18 accesses the home page 22, the telephone line control company 12 informs the general control company 16 of a telephone number accessed by the user 18. At this time, the provider 14 informs the general control company 16 of an access code connected with the user 18, an ID code, a connection date, an access time, and other identification information. The access code and additional identification information are recorded in the recording device 16a of the general control company 16.

When a hacker 26 who is one of the users 18 of the Internet accesses the home page 22 improperly, the date and time of the improper invasion is recorded in the system of the home page controller 24. All accesses are recorded in the recording device 16a of the general control company 16. Thus, it is possible to specify the hacker 26 who accessed the home page 22 at the time when the improper invasion was made.

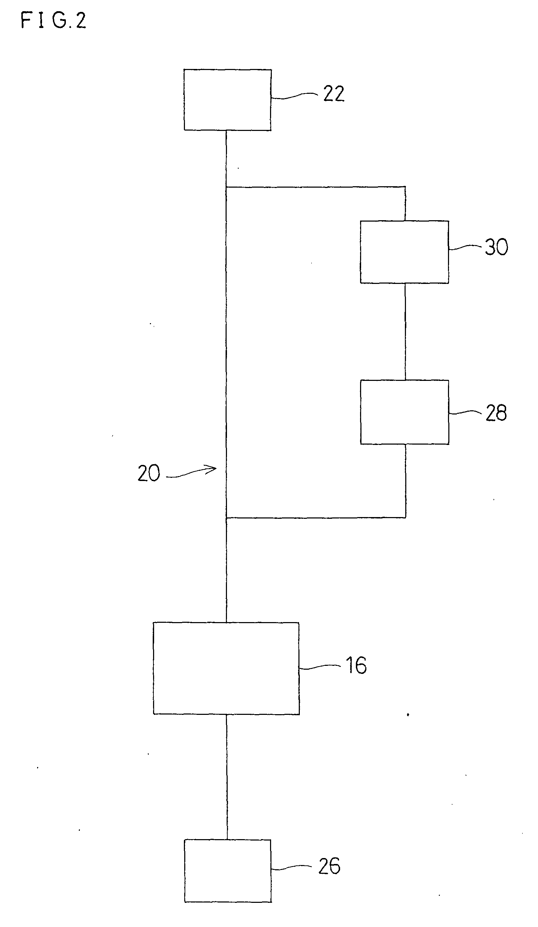

To conceal his identity, the hacker 26 may use a third party's computers 28, 30 as the proxy servers and invade a home page 22 indirectly from the computer 30 by connecting the hacker's computer to the third party's computer 28 and then connecting the computer 28 to the computer 30, as shown in Fig. 2. The access from the hacker's computer to the computer 28 is recorded. Because the computer 28 is connected to the Internet 20 through a communication line, the general control company 16 records the access from the computer 28 to the computer 30. Similarly, the access from the computer 30 to the home page 22 is recorded. Accordingly, when the date and time of the invasion into the home page 22 is determined, the hacker 26 is identified by sequentially tracing the recorded accesses.

Recording of all accesses enables the hacker 26 who invaded into the home page 22 improperly to be identified. Thus, the improper-access prevention system 10 has the effect of preventing the hacker 26 from making an invasion due to the ability to identify the hacker. Further, the improper-access prevention system 10 allows those who utilize the Internet formally to obtain information from the home page 22 or make electronic transactions with more security.

In the improper-access prevention system 10, the user's access states are all recorded. Therefore, it is possible to collectively manage the amount of money to be paid to the telephone line control company 12 and to the provider 14. That is, accounts can be settled easily. Accordingly, the telephone line control company 12 and the provider 14 have become members of the general control company 16.

According to preferred embodiments of the present invention, accesses of all users of the Internet are recorded to allow the general control company to obtain the information of the communication line control company and the Internet connecting company. Thus, if an improper access is made, the whereabouts of the hacker can be reliably determined. The recorded accesses of all users of the Internet serve as a mechanism for preventing improper access. Further, because all recorded accesses of the users of the Internet are controlled, the amount of money to be paid to the telephone line control company and the provider are collectively managed and accounts easily settled.

While preferred embodiments of the invention have been disclosed, various modes of carrying out the principles disclosed herein are contemplated as being within the scope of the following claims. Therefore, it is understood that the scope of the invention is not to be limited except as otherwise set forth in the claims.

## Claims

1. An improper-access prevention system comprising:
a communication line controller;
an Internet connecting company; and
a controller arranged to collectively control the communication line controller and the Internet connecting company which controls all information of a user of the Internet when a user's computer or other communication device is connected to the Internet and of a third party whose computer or other communication device is connected with said user's computer or other communication device.

2. An improper-access prevention system according to claim 1, wherein said information includes said user's telephone number, ID code or password.

3. An improper-access prevention system according to claim 1, wherein said information includes said third party's telephone number, access code, ID code, password, a connected date or a connected time.

4. An improper-access prevention system according to claim 2, wherein said information includes said third party's telephone number, access code, ID code, password, a connected date or a connected time.

5. An improper-access prevention system according to claim 1, wherein the date and time of an improper invasion of a homepage is recorded in the controller.

6. An improper-access prevention system according to claim 1, further comprises a recording device provided in the controller for recording all accesses of a homepage to determine an identity of a person accessing the homepage improperly.

7. An improper-access prevention system according to claim 1, wherein the controller determines the whereabouts of a person who improperly accesses a homepage.
